# EUROPÄISCHE PATENTSCHRIFT

(11) **EP 1 934 068 B1**
(45) Veröffentlichungstag und Bekanntmachung des Hinweises auf die Patenterteilung: **25.08.2010**
(21) Anmeldenummer: 06807109.1
(22) Anmeldetag: 10.10.2006
(51) Int. Cl.: B60K 6/20, F16H 3/54, B60K 25/02

(54) **MOTORGETRIEBENES FAHRZEUG MIT EINEM GETRIEBE FÜR EIN NEBENAGGREGAT, INSBESONDERE ALS PLANETENGETRIEBE ZUR INTEGRATION IN DEN ANTRIEB DES NEBENAGGREGATS, UND ENTSPRECHENDES GETRIEBE**
ENGINE-DRIVEN VEHICLE HAVING A GEAR MECHANISM FOR AN AUXILIARY UNIT, IN PARTICULAR AS A PLANETARY GEAR SET FOR INTEGRATION INTO THE DRIVE OF THE AUXILIARY UNIT, AND CORRESPONDING GEAR MECHANISM
VEHICULE MOTORISE DOTE D'UN ENGRENAGE POUR UN GROUPE AUXILIAIRE, EN PARTICULIER D'UN ENGRENAGE PLANETAIRE A INTEGRER DANS LE DISPOSITIF D'ENTRAINEMENT DU GROUPE AUXILIAIRE ET ENGRENAGE CORRESPONDANT

(30) Priorität: 11.10.2005 DE 102005049366
(43) Veröffentlichungstag der Anmeldung: 25.06.2008
(73) Patentinhaber: MBM Technologie GmbH, 09356 St. Egidien (DE)
(72) Erfinder: GEBHARDT, Jens, 08315 Bernsbach (DE); GÖPFERT, Andre, 08396 Waldenburg (DE); ZSCHOCKE, Dominik, 09112 Chemnitz (DE)
(74) Vertreter: Cremer, Christian
(86) Internationale Anmeldenummer: PCT/EP2006/067224
(87) Internationale Veröffentlichungsnummer: WO 2007/042511

(56) Entgegenhaltungen:
- EP-A- 0 654 620
- EP-A- 0 916 546
- EP-A- 0 992 707
- EP-A1- 1 249 360
- DE-A1- 19 911 924
- US-A- 5 122 099
- US-A- 5 826 671
- US-B1- 6 878 092

## Beschreibung

Die vorliegende Erfindung betrifft ein motorgetriebenes Fahrzeug mit einer Hauptantriebseinrichtung, mit einer Nebenantriebseinrichtung für ein Nebenaggregat, wobei die Hauptantriebseinrichtung mit der Nebenantriebseinrichtung gekoppelt und eine an der Hauptantriebseinrichtung erzeugte Leistung an die Nebenantriebseinriehtung überträgt.

Solche motorgetriebenen Fahrzeuge sind aus dem allgemeinen Stand der Technik bekannt. Es können Land-, Luft- oder Wasserfahrzeuge sein, die mit einer beliebigen Hauptantriebseinrichtung, zum Beispiel einem Verbrennungsmotor, einem Elektromotor oder dergleichen, angetrieben werden. Solche motorgetriebenen Fahrzeuge weisen Nebenaggregate auf, die über eine Nebenantriebseinrichtung ebenfalls angetrieben werden müssen, Solche Nebenaggregate sind zum Beispiel eine Lenkhilfepumpe, ein Klimakompressor, ein Lüfter oder dergleichen.

Die Nebenantriebseinrichtung wird in solchen motorgetriebenen Fahrzeugen regelmäßig durch eine Abtriebswelle der Hauptantriebseinrichtung angetrieben.

Nebenaggregate in motorgetriebenen Fahrzeugen beanspruchen aufgrund zunehmender Nennleistungen entsprechend erhöhte Antriebsleistungen. Daraus ergibt sich ein erhöhter Energieverbrauch und im Falle von Verbrennungsmotoren auch eine erhöhte Gesamtschadstoffemission des motorgetriebenen Fahrzeugs. Ein erhöhter Energieverbrauch und eine erhöhte Schadstoffemission ergibt sich auch aus dem Grunde, dass die Nebenaggregate abhängig vom Betrieb des Hauptantriebs sind, das heißt, von diesem mit angetrieben werden, unabhängig davon, ob gerade ein Leistungsbedarf des betreffenden Nebenaggregats vorliegt oder nicht.

Wenn das Nebenaggregat zum Beispiel eine Lenkhilfepumpe ist, muss diese die größte Leistung bei niedrigen Geschwindigkeiten abgeben, da nur dann schnelle Lenkbewegungen mit großen Lenkwinkeln gefordert sind. Eine niedrige Geschwindigkeit bedeutet aber auch eine niedrige Motordrehzahl und somit eine niedrige Antriebsdrehzahl der Lenkhilfepumpe im Nebenantrieb. Aus diesem Grunde muss die Lenkhilfepumpe so dimensioniert sein, dass sie eine ausreichend große Nenngröße aufweist, um auch bei geringer Antriebsdrehzahl eine zufriedenstellende Lenkhilfe zur Verfügung zu stellen.

Wenn das Nebenaggregat ein Klimakompressor ist, wird dieser nach dem Start des Motors in der Regel bis zum Beginn der Fahrt nur bei Leerlaufdrehzahl, betrieben und steht diesem selbst während der Fahrt aufgrund von Schaltvorgängen und Fahrzeugstillstand mit Leerlaufdrehzahl keine dauerhaft erhöhte Drehzahl zur Verfügung. Wenn nun eine maximale Leistung gefordert wird, zum Beispiel nach einer längeren Stillstandsphase bei Sonneneinstrahlung, muss dieser so ausgelegt sein, dass bei bereits bei geringen Drehzahlen die Nennleistung erreicht wird. Bei dem anschließenden Fahrbetrieb mit höheren Motordrehzahlen wird dann aber nach erreichter Abkühlung des Fahrzeuginnenraumes nur noch eine erheblich geringere Kühlleistung abgerufen.

Die beiden vorgenannten. Beispiele für Nebenaggregate zeigen also eine nicht optimale Anpassung zwischen Leistungsbedarf und Leistungsabgabe bzw. Drehzahlbedarf und Drehzahlverfügbarkeit.

Aus der Patentliteratur sind schon frühere Beispiele bekannt, in denen versucht worden ist, durch zusätzliche Getriebe für Nebenaggregate, die aus der Hauptantriebseinnchtung, wie der Kurbelwelle oder einem mit der Kurbelwelle verbundenen Abtriebseinrichtung, wie einer Riemenscheibe, angetrieben wurden, mit im Vergleich zur Hauptantriebseinrichtung veränderten Drehzahlen das Nebenaggregat zu betreiben. Hierbei sind insbesondere Maßnahmen bekannt, die mit unterschiedlichen Übersetzungszahlen in Abhängigkeit eines weiteren Parameters operieren.

DE 36 22 335 A1 zeigt ein an der Nockenwelle angebrachtes Planetengetriebe, das zwischen einer Übersetzung 1:1 und einer Übersetzung 1:3 durch eine einzurückende Bremsvorrichtung hin- und hergeschaltet werden kann. Beschreibungsgemäß soll ein mittlerer Drehzahlbereich zwischen ca. 700 - 1000 U/min und 2000 - 2400 U/min angehoben werden. Das Planetengetriebe arbeitet zwar mit einer Hysterese, es bietet aber nur zwei wechselweise zu wählende Drehzahlen an. Das Getriebe bietet also keine mehrstufige Schaltbarkeit. Weiterhin zeigt die einzige Figur der DE 36 22 335 A, die das Getriebe selber darstellt, die Planeten, deren Zähne mit Sonnen- und Hohlrad im Eingriff stehen und deren Zähne durch das Sonnenrad angetrieben sind. verwenden.

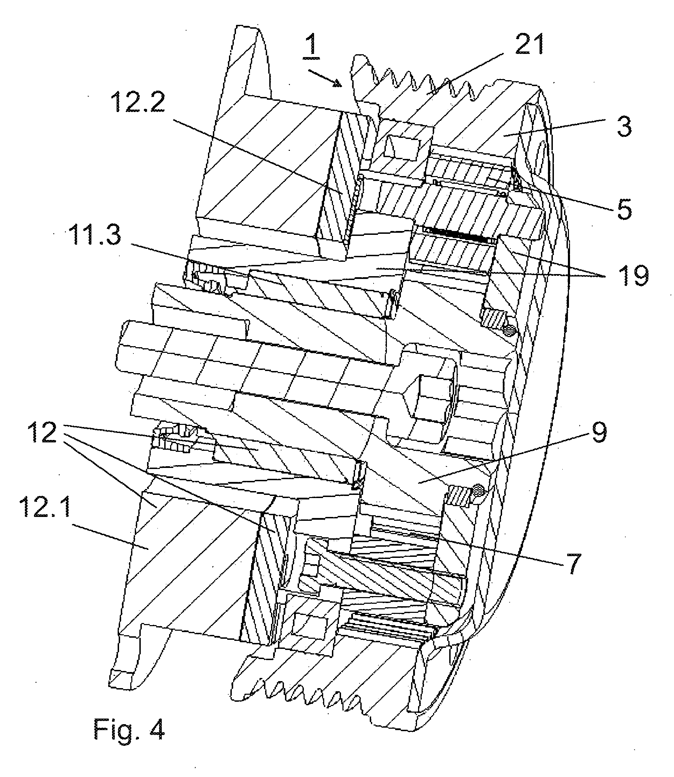

In der EP 0 916 546 A2 (Anmelderin, Toyota Jidosha Kabushiki Kaisha; Prioritätstag: 18.11.1997) wird ein Fahrzeug nach dem Oberbegriff des Anspruchs 1 offenbart. Die Figur 4 zeigt schematisch eine Gestaltung über eine elektromagnetische Kupplung, an die sowohl direktgekoppelte Nebenaggregate wie auch die Starter-Generator-Einheit angeschlossen sind. Wenn der Starter in antreibender Weise tätig ist, erfolgt die Leistungseinleitung auf den Antriebsstrang über das mittlere Sonnenrad auf das äußere Hohlrad.

Eine weitere Kupplung einer Starter-Generator-Einheit lässt sich in der DE 199 11 924 A1 (Anmelderin: MAN Nutzfahrzeuge AG; Anmeldetag: 17.03.1999) betrachten.

Unterschiedliche Betriebsweisen für Hybridkraftfahrzeugantriebe lassen sich der EP 1 249 360 A1 (Anmelderin: Denso Corp.; Prioritätstag: 10.04.2001), der US 5 826 671 (Patentinhaberin- Toyota Jidosha Kabushiki Kaisha; Prioritätstag: 12.12.1996) und der US 6 878 092 B1 (Patentinhaberin: Robert Bosch GmbH; Prioritätstag: 01.02.1999) entnehmen.

Vorteilhaft ist die Drehzahlanpassung von Nebenaggregaten einer Verbrennungskraftmaschine von Kraftfahrzeugantrieben. Die Nebenaggregate haben Komfortfunktionen für die Kraftfahrzeugnutzer oder Versorgungsfunktionen, für die Verbrennungskraftmaschine selbst.

Die EP 0 992 707 A2 (Anmelderin: Robert Bosch GmbH; Prioritätstag: 07.10.1998) zeigt ein Zweiganggetriebe nach dem Oberbegriff des Anspruchs 12 in unterschiedlichen. Schaltstellungen und aus unterschiedlichen Blickwinkeln in schematischen Darstellungen. Ein auf einem Wellenstutzen einer Rutschkupplung angeordnetes Antriebsrad wird über Stege und einem Planetenradpaarsatz auf eine mittig angeordnete Ausgangswelle durch mehrfaches Umleiten des Kraftflusses verbunden.

Ein im Vergleich zu der EP 0 992 707 A2 günstigerer Kraft- und Momentenfluss lässt sich aus der US 5 122 099 (Patentinhaberin: Borg Warner Automotive Inc.; Anmeldetag: 04.04.1991) entnehmen. Die Übersetzungskupplung arbeitet mit einem Bremsband, sodass zwischen einem Freilauf und einer 1:1 -Übertragung hin- und hergeschaltet werden kann.

Längere Lebensdauern eines Nebenaggregateantriebs sollen gem. EP 0 654 620 A1 (Anmelderin: Carl Freudenberg; Prioritätstag: 08.06.1994) durch den Einsatz von Überholgetrieben bei gewissen Drehzahlüberschreitungen ermöglicht werden.

Die GB 20 22 202 A beschreibt zwei Ausführungsbeispiele, abgebildet in den Figuren 2 und 5, eines temperaturabhängigen Ventilatorgetriebes, die sich durch ihre Ansteuerungen unterscheiden. Auch in der GB 20 22 202 A ist nur ein einziger Planet, dessen Zähne mit Sonnen- und Hohlrad im Eingriff stehen, zu sehen, wobei die Abtriebsachse hohlradähnlich ausgestaltet ist.

Die Aufgabe der vorliegenden Erfindung ist daher, ein motorgetriebenes Fahrzeug der eingangs Art derart weiter zu bilden, dass die starre Kopplung eines Nebenaggregats an die Drehzahl der Hauptantriebseinirichtung in vorteilhafter Weise aufgehoben wird, indem bei dem zur Verfügung stehenden. Bauraum im Nebenantrieb eine Lösung gesucht wird, die energetisch vorteilhaft integrierbar ist. Weiterhin besteht die Aufgabe darin, eine entsprechende Getriebeeinheit zu schaffen, die auch in einem Kraftfahrzeug heutiger Bauart verbaubar ist.

Die Aufgabe wird erfindungsgemäß dadurch gelöst, dass zwischen der Nebenantriebseinrichtung und dem Nebenaggregat ein unterbrechungsfrei mehrstufig schaltbares Getriebe angeordnet ist. Das Getriebe zeichnet sich durch die Merkmale des entsprechenden unabhängigen Anspruchs aus. Diese Aufgabe wird durch die Merkmale der Ansprüche 1 und 12 gelöst.

Mit der Anordnung eines unterbrechungsfrei mehrstufig schaltbaren Getriebes zwischen der Nebenantriebseinrichtung und dem Nebenaggregat ist es möglich, sehr viel Energie einzusparen. Bei Verbrennungsmotoren könnte die Einsparung des Treibstoffes bei etwa 0,5 bis 1,0 Liter / 100km liegen. Entsprechend wird auch die Gesamtschadstoffemission bei Verbrennungsmotoren gesenkt.

Ein weiterer Vorteil gemäß vorliegender Erfindung ist darin zu sehen, dass das Getriebe ein Hohlrad aufweist, über das der Antrieb erfolgt. Darüber hinaus ist es von Vorteil, dass das Getriebe auch ein Sonnenrad, ein inneres Planetenrad und ein äußeres Planetenrad aufweist. Mit diesen Bauelementen kann das Getriebe als Umlaufrädergetriebe ausgebildet werden und so gestaltet werden, dass es in vorteilhafter Weise unter Beibehaltung der Drehrichtung ins Schnelle übersetzt. Die Möglichkeit der Übersetzung ins Schnelle gestattet bei fehlender oder geringer Last den energetisch günstigen Betrieb des Nebenaggregats mit minimaler Drehzahl hei drehzahlgleicher Übertragung. Bei Leistungsanforderung kann in einer Sprungfunktion unterbrechungsfrei auf die Übersetzung ins Schnelle gewechselt werden, so dass die geforderte Leistung hinreichend spontan zur Verfügung steht.

Ein weiterer Vorteil besteht darin, dass das Getriebe mehrere Betriebsmodi aufweist, von denen wenigstens ein erster Betriebsmodus fremdbetätigt schaltbar ist.

Ein weiterer Vorteil besteht darin, dass ein zweiter Betriebsmodus das Nebenaggregat stillsetzt. Darüber hinaus ist auch von Vorteil, dass die Betriebsmodi drei Schaltstufen umfassen. In dieser bevorzugten vorteilhaften Ausführungsform bewirkt die erste Schaltstufe die Stillsetzung (i = 0), die zweite Schaltstufe eine drehzahlgleiche Übertragung (i = 1) und die dritte Schaltstufe eine Übersetzung oder Untersetzung bewirkt (i ungleich 1).

Schließlich ist von Vorteil, dass das Hohlrad durch ein Zugmittel getrieben ist, wie beispielsweise durch einen Riemen. Dazu soll das Hohlrad in vorteilhafter Weise als innenverzahnte Riemenscheibe ausgebildet sein. Mit diesen Merkmalen ist es möglich, das Getriebe in den Riementrieb für ein Nebenaggregat zu integrieren.

Verschiedene Ausführungsformen der vorliegenden Erfindung werden im Folgenden anhand der Zeichnungen näher beschrieben. Es zeigen:
Fig. 1 eine schematische, perspektivische Ansicht eines als Umlaufrädergetriebe ausgebildeten Getriebes gemäß vorliegender Erfindung zum Einsatz in einem motorgetriebenen Fahrzeug;
Fig. 2 eine schematische Seitenansicht des Umlaufrädergetriebes aus Fig. 1;
Fig. 3 eine schematische Explosionsdarstellung des Umlaufrädergetriebes aus Fig. 1;
Fig. 4 eine Schematische, perspektivische Ansicht einer weiteren Ausführungsform eines als Umlaufrädergetriebe ausgebildeten Getriebes gemäß vorliegender Erfindung zum Einsatz in einem motorgetriebenen Fahrzeug;
Fig. 5 eine schematische Seitenansicht des Umlaufrädergetriebes aus Fig. 4;
Fig. 6 eine schematische Explosionsdarstellung des Umlaufrädergetriebes aus Fig. 4;
Fig. 7 eine Schnittdarstellung eines weiteren Ausführungsbeispiel eines erfindungsgemäßen Umlaufrädergetriebes;
Fig. 8 einen gegenüber Fig. 7 nachteiligeren Kraftfluss mit Umlenkungen und
Fig. 9 ein geeignetes Planetenzahnrad einer ähnlichen Ausführung nach Figur 1 bis 3 oder nach Figur 4 bis 6 oder nach Figur 7.

Ähnliche Teile sind mit den gleichen Bezugszeichen beschriftet worden, obwohl sie in einigen, für das Verständnis nicht so wesentlichen Aspekten voneinander abweichen mögen.

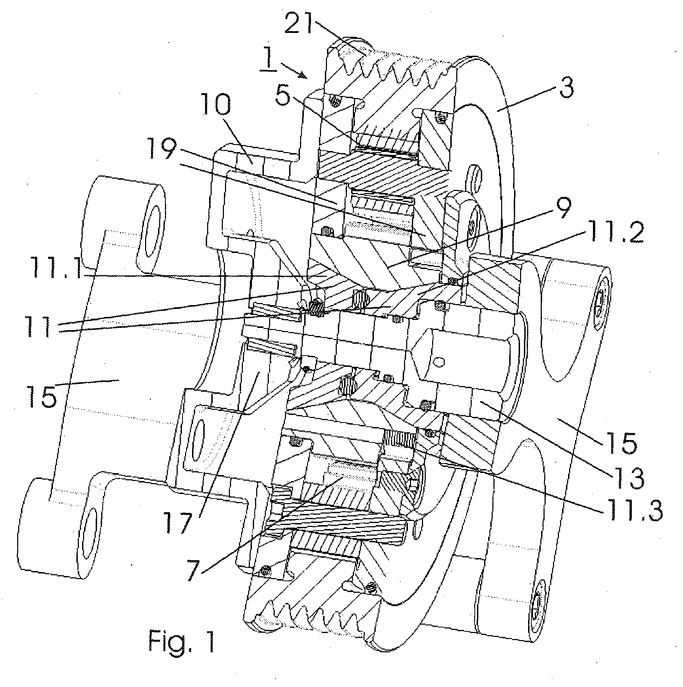

In Fig. 1 ist schematisch eine perspektivische Darstellung eines Getriebes 1 zum Einbau in ein motorgetriebenes Fahrzeug gemäß Anspruch 1 im Anschnitt dargestellt. Das Getriebe 1 ist in der vorliegenden Ausführungsform als Umlaufrädergetriebe ausgebildet. Das Getriebe 1 umfasst ein Hohlrad 3, das in der vorliegenden Ausführungsform als innenverzahnte Riemenscheibe ausgebildet ist. Das Hohlrad 3 steht mit einem äußeren, Planetenrad 5 in Eingriff. Das äußere Planetenrad 5 steht mit einem inneren Planetenrad 7 in Eingriff Das innere Planetenrad 7 steht mit einem Sonnenrad 9 in Eingriff. Das Sonnenrad umschließt eine Kupplungseinrichtung 11, die in der vorliegenden Ausführungsform als Konuskupplung ausgebildet ist und das Kupplungsteil 11. 1 und ein zweites Kupplungsteil 11.2 umfasst.

Darüber hinaus umfasst die Kupplungseinrichtung 11 auch eine Freilaufkupplung 11.3. Das erste Kupplungsteil 11.1 und das zweite Kupplungsteil 11.2 sitzen auf einem Kupplungsträger 13. Kupplungsträger 13 ist an einer Drehmomentstütze 15 und an einem Adapter 17 gelagert. Über den Adapter 17 wird das Getriebe 1 in geeigneter Weise in der Nähe des entsprechenden Nebenaggregats bzw. in der Nähe der entsprechenden Nebenantriebseinrichtung montiert, derart, dass dieses in den Nebenantrieb des Nebenaggregats integriert ist. Eine Stegeinrichtung 19 ist geteilt in einen ersten Steg 19.1 und 19.2 und dient zur Führung und Aufnahme der Planetenräder 5, 7 sowie zur Ein- bzw. Ausleitung des Drehmoments.

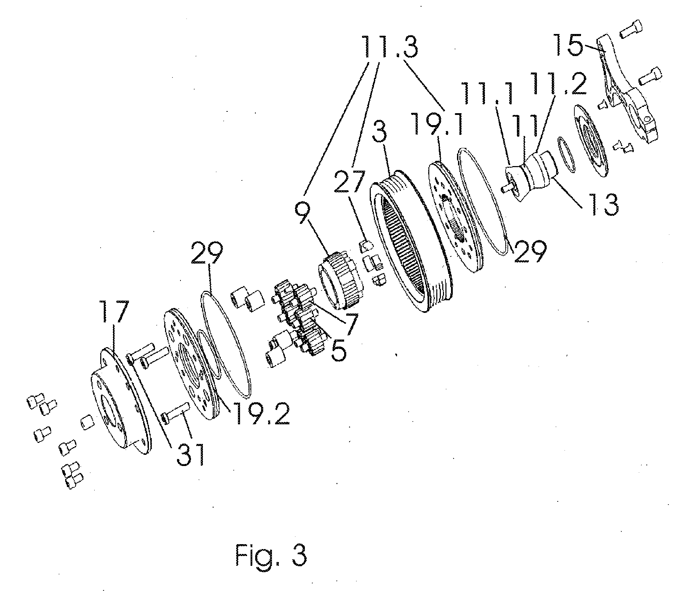

In Fig. 3 ist schematisch eine Explosionsdarstellung des Getriebes 1 aus Fig. 1 dargestellt. An der Drehmomentstütze 15 sind die mit Bezug auf Fig. 1 beschriebenen Bauteile angeordnet: das erste Kupplungsteil 11.1, der erste, rechte Steg 19.1, der Kupplungsträger 13, das Hohlrad 3, die Freilaufkupplung 11.3, das Sonnenrad 9, die inneren Planetenräder 7 und die äußeren Planetenräder 5, das zweite Kupplungsteil 11.2, der zweite, linke Steg 19.2, der Adapter 17.

Das Getriebe 1 umfasst demnach im Wesentlichen ein Hohlrad 3 sowie ein oder mehrere mit diesem permanent in Eingriff stehende äußere Planentenräder 5 sowie wiederum mit diesen permanent in Eingriff stehende innere Planetenräder 7, welche mit dem konzentrisch angeordneten Sonnenrad 9 in Eingriff stehen, wobei der Antrieb über das Hohlrad 3 erfolgt.

In einer, bevorzugten, Ausführungsform weist das Getriebe mehrere Betriebsmodi auf, wobei drei Betriebsmodi drei Schaltstellungen entsprechen, nämlich einer ersten Schaltstufe, die eine Stillsetzung bzw. vollständige Auskupplung bewirkt, eine zweite Schaltstufe, die eine drehzahlgleiche Übertragung bewirkt (i =1) und eine dritte Schaltstufe, die den Betrieb einer Übersetzung oder Untersetzung bewirkt (i ungleich 1).

Die Auslösung der Schaltstellungen kann entweder selbst betätigt und/oder drehrichtungsgebunden erfolgen oder fremdbetätigt, wie beispielsweise hydraulisch oder elektromechanisch oder in Kombination der genannten Verfahren erfolgen.

Das unterbrechungsfrei mehrstufig schaltbare Getriebe 1 kann eine Kinematik mit Failsafe-Verhalten aufweisen, so dass bei Ausfall des Aktuators das Getriebe 1 selbsttätig auf i = 1 zurückläuft.

Die erfindungsgemäße Anordnung erlaubt den Betrieb des Nebenaggregates mit einer gegenüber der starren Kopplung an die Drehzahl einer Kurbelwelle angepassten Drehzahl, so dass auch bei reduzierter Baugröße des Nebenaggregates dieses im Auslegungspunkt die gleiche Leistung bereitstellen kann. Eine Übersetzung des unterbrechungsfrei mehrstufig schaltbaren Getriebes 1 ins Schnelle mit dem Wert i = x erlaubt eine Erhöhung der Drehzahl des Neben aggregates um den Faktor x und erlaubt eine Reduzierung des spezifischen Verdrängungsvolumens des Aggregats auf den Wert 1/x.

Bei einem Wechsel auf den Betrieb mit i = 1 wird aufgrund der verringerten Leistungsaufnahme, die sich aus der reduzierten Baugröße ergibt, der Energieverbrauch des jeweiligen Nebenaggregats reduziert.

Durch die erfindungsgemäße Anordnung laufen der Abtrieb des zugeordneten unterbrechungsfrei mehrstufig schaltbaren Getriebes 1 bzw. Umlaufrädergetriebes und das Nebenaggregat hei fehlender oder geringer Last bei i = 1 mit geringen Drehzahlen und optimalem Wirkungsgrad, geringem Verschleiß und minimalem Geräusch. Die Nenngrößen und damit die Leistungsaufnahme der beispielhaft beschriebenen Lenkhilfepumpe und des beispielhaft beschriebenen Klimakompressors können entsprechend auf 1/x reduziert werden Somit werden erhebliche Einsparpotentiale sowohl auf der Investitionsseite bei den Kosten der Aggregate als auch bei den Betriebskosten durch geringeren Kraftstoffverbrauch wegen der verringerten Gesamtleistungsaufhahme erzielt. Gleichzeitig wird die Schadstoffbilanz verbessert und die zum Fahrzeugantrieb verfügbare Leistung erhöht.

Beispielhaft werden zwei Zustande beschrieben (in einer ersten Ausgestaltung):
Zustand 1. (Übersetzung 1:1)
   - Antrieb über Riemenscheibe
   - Abtrieb über Steg
   - Konuskupplung offen
   - Freilaufkupplung im Eingriff
      Zwei Getriebeelemente sind starr verbunden, das heißt, das Getriebe 1 läuft als Block um
Zustand II. (Übersetzung 1:x.)
   - Antrieb über Riemenscheibe
   - Abtrieb über Steg
   - Konuskupplung geschlossen
   - Freilaufkupplung im Überholbetrieb
      Sonnenrad steht, das heißt, Getriebe übersetzt ins Schnelle

In Fig. 4 ist schematisch eine perspektivische Darstellung eines Getriebes 2 zum Einbau in ein motorgetriebenes Fahrzeug gemäß Anspruch 1 im Anschnitt dargestellt. Das Getriebe arbeitet nach dem erfinderischen Prinzip des nebengeordneten Anspruchs. Das Getriebe 2 ist in der vorliegenden Ausführungsförm als Umlaufrädergetriebe ausgebildet. Das Getriebe 2 umfasst ein Hohlrad 3, das in der vorliegenden Ausführungsform als innenverzahnte Riemenscheibe ausgebildet ist. Das Hohlrad 3 steht mit einem äußeren Planetenrad 5 in Eingriff. Das äußere Planetenrad 5 steht mit einem inneren Planetenrad 7 in Eingriff. Das innere Planetenrad 7 steht mit einem Sonnenrad 9 in Eingriff Die Planetenräder sind mit dem Steg 19 verbunden. An den Steg ist eine Schalteinrichtung 12 adaptiert, die in der vorliegenden Ausführungsform als elektromagnetische Bremse ausgebildet ist und das Bremselement 12.1 und ein zweites Bremselement 12.2 umfasst.

Darüber hinaus umfasst die Schalteinrichtung 12 auch eine Freilaufkupplung 11.3. Das erste Bremselement 12.1 ist drehfest mit dem Gehäuse des jeweiligen Nebenaggregates verbunden und stellt somit die Abstützung des Drehmoment im geschalteten Modus her. Das zweite Bremselement 12.2 ist mit dem Steg 19 verbunden. Dieser Steg 19 ist geteilt in einen ersten Steg 19.1 und 19.2 und dient zur Führung und Aufnahme der Planetenräder 5, 7 sowie zur Ein- bzw. Ausleitung des Moments, insbesondere eines Dreh- oder Bremsmoments. Über die Sonne 9 wird das Getriebe 2 in geeigneter Weise in der Nähe des entsprechenden Nebenaggregats bzw. in der Nähe der entsprechenden Nebenantriebseinrichtung montiert, derart, dass dieses in den Nebenantrieb des Nebenaggregats integriert ist.

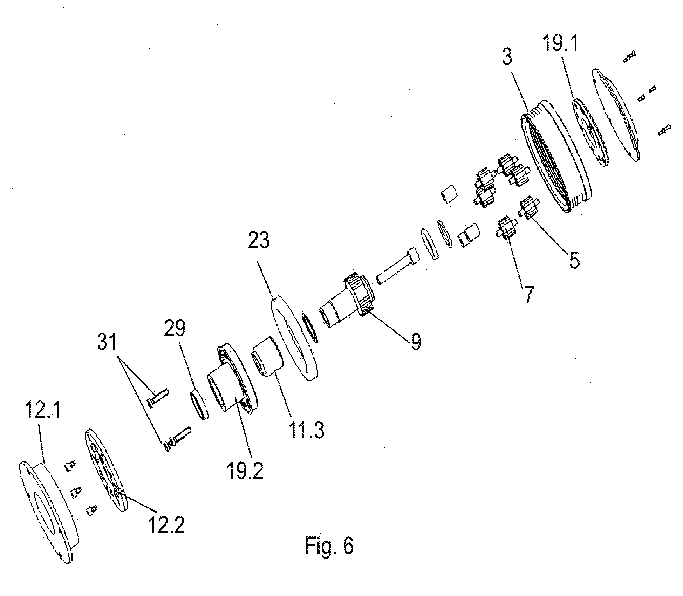

In Fig. 6 ist schematisch eine Explosionsdarstellung des Getriebes 2 aus Fig. 4 dargestellt. Um die Sowie, 9 sind die mit Bezug auf Fig. 4 beschriebenen Bauteile angeordnet: das erste Bremselement 12.1, der erste, rechte Steg 19.1, das Hohlrad 3, die Freilaufkupplung 11.3, das abgedichtete Lager 23, die inneren Planetenräder 7 und die äußeren Planetenräder 5, das zweite Bremselement 12.2, der zweite, linke Steg 19.2, die Spannschrauben 31.

Das Getriebe 2 umfasst demnach im Wesentlichen ein Hohlrad 3 sowie ein oder mehrere mit diesem permanent in Eingriff stehende äußere Planentenräder 5 sowie wiederum mit diesen permanent in Eingriff stehende innere Planetenräder 7. welche mit dem konzentrisch angeordneten Sonnenrad 9 in Eingriff stehen, wobei der Antrieb über das Hohlrad 3 erfolgt.

Die Auslösung der Schaltstellungen zwischen den Schaltmodi kann entweder selbst betätigt und/oder drehrichtungsgebunden erfolgen oder fremdbetätigt, wie beispielsweise hydraulisch, pneumatisch oder elektromechanisch oder in Kombination der genannten Verfahren erfolgen.

Bei einem Wechsel auf den Betrieb mit i = 1 wird aufgrund der verringerten Leistungsaufnahme, die sich aus der reduzierten Baugröße ergibt, der Energieverbrauch des jeweiligen. Nebenaggregats reduziert

Durch die erfindungsgemäße Anordnung laufen der Abtrieb des zugeordneten unterbrechungsfrei mehrstufig Schaltbaren Getriebes 2 bzw. Umlaufrädergetriebes und das Nebenaggregat bei fehlender oder geringer Last bei i = 1 mit geringen Drehzahlen und optimalem Wirkungsgrad von 100%, ohne Verschleiß und Geräusch. Die Nenngrößen und damit die Leistungsaufnahme der beispielhaft beschriebenen Lenkhilfepumpe und des beispielhaft beschriebenen Klimakompressors können entsprechend auf 1/x reduziert werden. Somit werden erhebliche Einsparpotentiale sowohl auf der Investitionsseite bei den Kosten der Aggregate als auch bei den Betriebskosten durch geringeren, Kraftstoffverbrauch wegen der verringerten Gesamtleistungsaufnahme erzielt. Gleichzeitig wird die Schadstoffbilanz verbessert und die zum Fahrzeugantrieb verfügbare Leistung erhöht.

Beispielhaft werden zwei Zustände beschrieben (in einer zweiten Ausgestaltung):
Zustand 1. (Übersetzung 1: 1.)
   - Antrieb über Riemenscheibe
   - Abtrieb über Sonne
   - Bremse offen
   - Freilaufkupplung im Eingriff
      Zwei Getriebeelemente sind starr verbunden, das heißt, das Getriebe 2 läuft als Block um
Zustand II. (Übersetzung 1:x)
   - Antrieb über Riemenscheibe
   - Abtrieb über Sonne
   - Bremse geschlossen
   - Freilaufkupplung im Überholbetrieb
      Steg steht, das heißt, Getriebe übersetzt ins Schnelle

Die Stegeinrichtung 19 nach dem Ausführungsbeispiel der Figuren 4 bis 6 ist durch Spannschrauben 31, die sich von dem rechten Steg 19.1 auf den linken Steg 19.2 erstrecken, als Stegspannschrauben verspannt. Zwischen den Stegeinrichtungen befinden sich die Radsätze des Planetengetriebes, die immer paarweise auftreten. Das Hohlrad 3 wird über seine, vorzugsweise bei einem Riementrieb aufgeschrumpfte Lauffläche 21 durch einen (nicht dargestellten) Trieb, wie zum Beispiel einer Kette oder einem Riemen, starr drehzahlgekoppelt von der Antriebswelle her angetrieben. Das innerhalb des Hohlrades 3 angeordnete planetenartige Übersetzungsgetriebe 2 übersetzt, durch die innenliegende Anordnung im Kreisring um den Abtrieb herum bauraumsparend, die Drehzahl auf die an den Antrieb angeschlossene (nicht dargestellte) Komponente des Nebenaggregates. Eine geeignete Übersetzung für viele Nebenaggregate ist eine Übersetzung in das Schnelle. Wie einleitend schon ausgeführt, ist zum Beispiel bei einem Nebenaggregat Lenkhelfpumpe mehr als 99,8 % der Laufleistung der Pumpe auf Vorgänge anzuwenden, bei welchen das Getriebe verlustfrei als Block umläuft. Der Langzeitmesswert von 99,8 % hat sich bei einer Ausgestaltung ergeben, der bei einer Pumpe ermittelt worden ist, die mit einer Halbierung des spezifischen Fördervolumens gegenüber einer Pumpe ohne Getriebe aufgebaut worden ist. In nur 0.2 % der Einsatzbedingungen bzw. der Einsatzzeit ist ein Hochtrieb ins Schnelle um den Faktor 2 erforderlich. Andere Nebenaggregate zeigen ähnlich dramatische Fehlanpassungen, so dass eine Drehzahlanpassung wesentlich zur Effizienzsteigerung beiträgt. Von dem Hohlrad 3 mit seiner Innenverzahnung 25 wird die Rotation, vorzugsweise möglichst verlustfrei als Block umlaufend, über jeweils zwei Planetenräder 5, 7, die mehrfach, z. B. dreifach oder vierfach auftreten, auf das Sonnenrad 9 übertragen. Die Schalteinrichtung 12 mit einer Freilaufkupplung 11.3 stellt die gleichozienderte Drehrichtung zwischen Antrieb und Abtrieb des im Hohlrad 3 angeordneten Planetengetriebes bei geöffneter Bremse sicher, um ein synchrones Umlaufen als Block zu ermöglichen. Während bei gewünschten. Übersetzungen von i ≠ 1, z. B. in niedrigen Drohzahlbereichen der Vefbrennungskraßmaschine, von der Schalteinrichtung 12 die Bremse zügig geschlossen wird und die Freilaufkupplung 11.3 entlastungsfrei überholt. Mittels Bremse, die sich aus den Bremselementen 12.1 und 12.2 zusammensetzt, wird der Steg 19 mit dem Gehäuse des Nebenaggregats (nicht graphisch dargestellt) verbunden, und so die Übersetzung i ≠ 1 aktiviert. Die Planentenräder 5, 7 kämmen ineinander. Das innere Planetenrad 7 überträgt die Antriebskraft auf das Sonnenrad 9. Das äußere Planetenrad5 wird durch die Innerverzahnung 25 des Hohlrads 3 angetrieben.

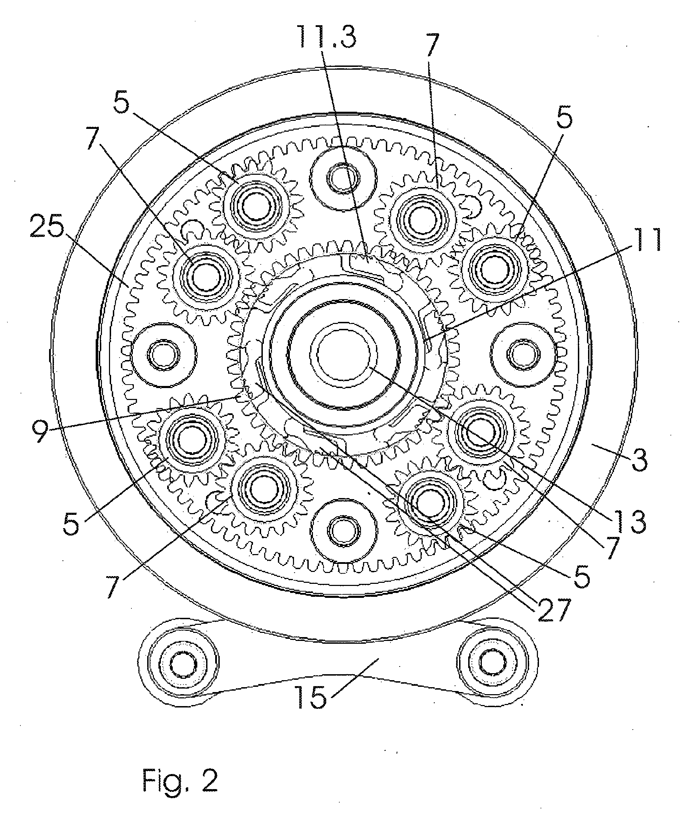

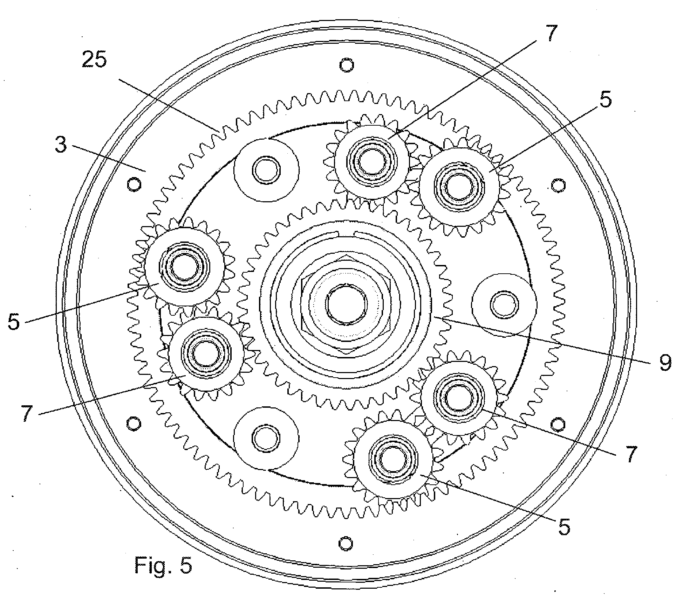

Die Figuren 2 und 5 zeigen jeweils eine Schnittansicht durch zwei unterschiedliche Ausführungsformen der Erfindung gem. den Figuren 1 und 4. Die Planetenräder 5, 7, das Sonnenrad 9, das Hohlrad 3 mit seiner Innenverzahnung 25 sehen von einer seitlichen Perspektive wie ein doppelt aufgebautes Planetensystem aus, wobei die beiden ineinander kämmenden Planetenräder 5, 7 zueinander sowohl in Umfangsrichtung als auch in Richtung auf das Zentrum versetzt die Kraft ohne weitere Umlenkungen von Außen nach Innen übertragen können. Zum Verständnis der restlich dargestellten Bezugszeichen wird auf die Erklärungen zu den Figuren 1, 3, 4 und 6 verwiesen.

Obwohl es eng in erfindungsgemäßen Hohlrädern 3 zugeht, z. B. hat ein Hohlrad 3 für eine Lenkhelfpumpe einen Außendurchmesser von ca. 100 mm bis 130 mm und z. B. hat ein Hohlrad 3 für einen Kompressor, insbesondere einen Klimakompressor, einen Außendurchmesser von ca. 90 mm bis 135 mm, ist nach einem Aspekt ein erfindungsgemäßes Nebenaggregatgetriebe mit zwei jeweils ineinander eingreifende Planetenräder ausgestattet, denn so lässt sich ein Übersetzungsverhaltnis in das Schnelle mit einer Spreizung von knapp unter 6 bis auf Werte von mehr als 1,5, z. B. 1,7, erzeugen. Die Übersetzung behält die Drehrichtung zwischen angetriebener Riemenscheibe und Sonnenrad bei. Als günstig haben sich Zähnezahlen von ca. 100 Zähnen für die Innenverzahnung 25 des Hohlrads 3 in Versuchen gezeigt, das bedeutet eine Zahnteilung der Innenverzahnung von 1,8° über den Innenumfang, während das Sonnenrad 9 z. B. 17 oder 60 Zähne aufweist. Der durch die Dichtung 29 (siehe Fig.3 und Fig.6) und dem abgedichteten Lager 23 verschlossene Getrieberaum, in dem sich die Zahnräder befinden, ist vor Schmutzeintritt in den Raum und Schmiermittelverlust aus dem Raum geschützt.

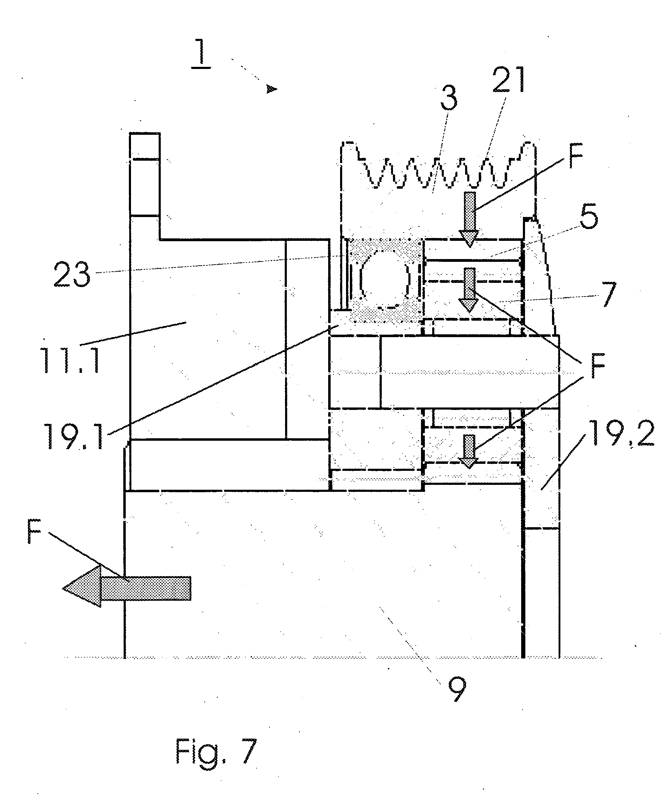

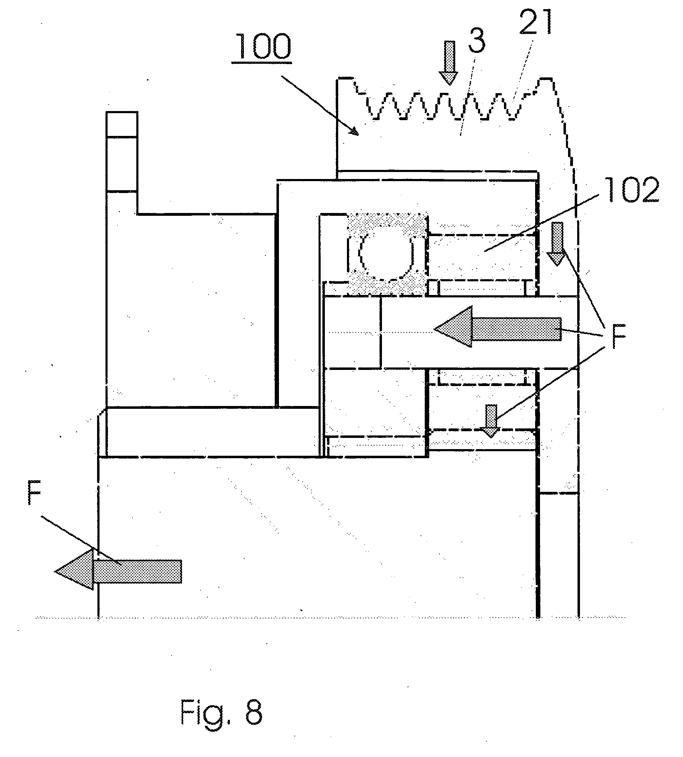

Ein weiterer Aspekt der vorliegenden Erfindung ist aus Figur 7 gegenüber der Figur 8 zu entnehmen. Die Figur 7 zeigt, wie der Kraft- bzw. der Momentenfluss (F) in einem erfindungsgemäßen Planeten,getrlebe zu realisieren ist. Der Kraftfluss (F) erfolgt in der gleichen Ebene von Außen nach Innen. Erst das kraftausleitenden drehzahlangepasste Element, z. B. das Sonnenrad 9, erfährt eine Kraft- und damit einhergehende Momentenumlenkung. Die übrigen Zahnübersetzungen zwischen Hohlrad 3 des Getriebes 2 auf die äußeren Planetenräder 5 auf der einen Seite, dem äußeren Planetenrädern 5 auf die inneren Planetenräder 7 auf der anderen Seite und von den inneren Planetenrädern 7 auf das Sonnenrad 9 als dritte Übersetzung erfahren eine gleichgerichtete Kraftübersetzung, d. h., die Kraftübersetzung ist jeweils von einem Zahnrad auf das nächste Zahnrad von Außen nach Innen in der gleichen, zur Stegeinrichtung 19.1 und 19.2 parallelen Ebene vorhanden, wobei nur die Übersetzungsverhältnisse die Drehgeschwindigkeit, die Kräfte und das Moment bestimmen. Ein erfindungsgemäßer Nebenaggregateantrieb, unmittelbar über ein mechanisches Triebmittel gekoppelt, gespeist aus dem Motorhauptantrieb, hat eine von Außen nach Innen verlaufende Kraftübertragung in identischer Richtung. Das erfindungsgemäße Getriebe 2 ist im Übersetzungsbereich des Hohlrads 3, dem um das Sonnenrad 9 angeordneten Kreisringsegment, momentenumlenkungsfrei. Das erfindungsgemäße Getriebe 2 nach den Figuren 4 bis 7 lässt sich gegenüber einem Getriebe 100 nach der Figur 8, das ebenfalls unterhalb eines Hohlrades 3 mit seiner Lauffläche 21 zu bilden ist, somit belastungsärmer, langzeitstabiler, mit weniger Abnutzung in einem weiteren Spreizungsbereich des Übersetzungsverhältnisses realisieren, als die oben zitierten Beispiele aus dem Stand der Technik. Die besonderen Anwendungsfälle im automobilen Nebenaggregateantrieb, mit Übersetzungen von 2 bis ca. 5,9, mit mechanischer Koppelung lassen sich mit einem erfindungsgemäßen Getriebe 1, oder 2 entgegen der bisher veröffentlichten Ansätze mit einem Planetenrad 102 im Automobil nun serientauglich realisieren.

Nach einem erfinderischen Aspekt besteht ein erfindungsgemäßes Planetengetriebe aus den drei dominanten Hauptkomponenten Hohlrad, Steg und Sonnerad. Die Konturen aller drei Elemente lassen sich abstrahiert und in grundsätzlicher Betrachtung geometrisch als einfache Hohlzylinder beschreiben. Wie aus den Figuren 7 und 8 zu entnehmen ist, sind die Hohlzylinderelemente vorlagerungsfrei ohne weitere Platten herstellbar. Die Hauptkomponenten Hohlrad 3, Steg 19 und Sonnenrad 3 sind einfache, geometrische Figuren, die (im mathematischen Sinne) zusammenhängend (technologisch sinnvoll) als Drehteil herstellbar sind. Sie sind Rundkörper, an die keine Abschlussflächen anzuschließen sind. Im Gegensatz dazu müssen bei den bisher üblichen Getrieben an den Hohlzylindern zusätzlich momentübertragende, ringförmige Platten angebracht werden, da das Drehmoment um mindestens ein Getriebeelement geführt weiden muss. Dadurch ist der beanspruchte Bauraum des erfindungsgemäßen Planetengetriebes sowohl in axialer als auch in radialer Richtung deutlich geringer als bei den bekannten Getrieben. Der vordergründige Nachteil zwei Planetenräder an Stelle von einem zu verwenden, wird durch diese indirekten Maßnahmen mehr als deutlich kompensiert. Gleichzeitig vereinfachen sich die Fertigungsverfahren dramatisch, was sich nicht zu letzt auch in den Herstellungskosten niederschlägt.

Die Ansteuerung zwischen den Modi kann nach verschiedenen, nicht graphisch dargestellten Ausführungsbeispielen bedarfsgesteuert oder drehzahlgesteuert sein. Die Aktuatorik für die Modiverstellung kann an einem mit entsprechenden Meßsensoren, wie Winkelgeschwindigkeitsmesser, Drehzahlmesser, Leistungsmesser ausgestatteten Elektronik, wie Motorsteuergerät, angeschlossen werden. Mit der Elektronik kann nach bekannten Verfahren auch eine Regelung für das Getriebe aufgebaut werden. Auch können Ventile die Hilfsmedien wie Luft oder Öl steuern, die die Aktuatorik bedienen.

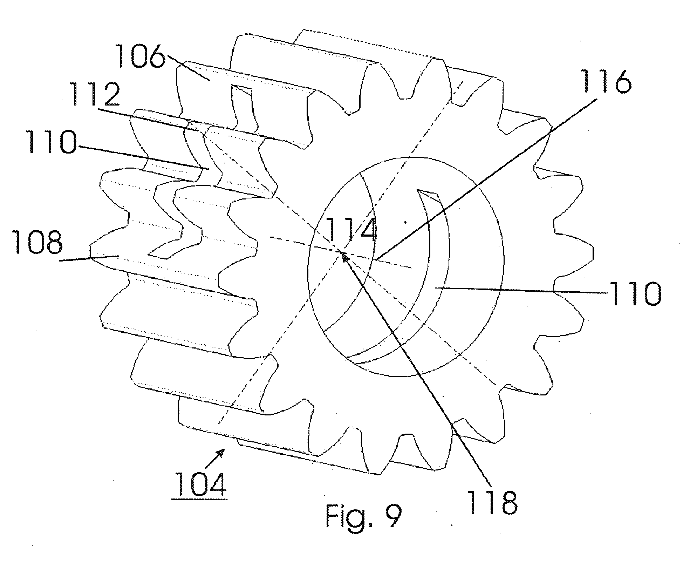

Figur 9 zeigt ein Detail, das in jedem der dargestellten Ausführungsbeispiele als erstes Planetenrad 5 oder als zweites Planetenrad 7 umsetzbar ist. Bei Versuchen mit erfindungsgemäßen Planetengetrieben im Nebenaggregatestrang von Kraftfahrzeugmotoren, bei größeren prozentualen Hochtriebszeiten (z. B. 50 % Hochtriebsanteil (i ≠ 1) bei einem Klimakompressor gegenüber 50 % mit i - 1) hat es sich gezeigt, dass die Ölschmierung der mit Getriebeöl befüllten Planetengetriebe wesentlich ist. Der Ölnebel, der im Getriebe entsteht, wird zur Schmierung der Planetenradlager verwendet. Hierzu sind in einem Planetenrad 104, das an Stelle der vorher beschriebenen Planetenräder 5, 7 eingesetzt wird, eine oder mehrere Nuten 110, die als Schmiernuten zu nutzen sind, vorgesehen. Die jeweilige Nut 110 ist in ihrer Länge begrenzt. Die Nut 110 durchteilt einige Zähne des Planetenrads 104. Die Nut 110 verläuft von einem ersten Zahn 106 bis zu einem zweiten Zahn 108, wobei beide Zähne 106, 108 nicht zueinander benachbart sein müssen. Die Nut 110 liegt vorzugsweise in der Mitte der Breite des Planetenrads 104. Die Mitte 112 der Nut 110 fällt dann mit der Mitte 114 des Zahnrads 104 nahezu oder tatsächlich zusammen. Um das Planetenrad 104, das sich nach einem Ausgestaltungsbeispiel mit Drehzahlen zwischen 10.000 und 40.000 Umdrehungen / min, vorzugsweise 20.000 Umdrehungen / min dreht, unwuchtfrei, umlaufen zu lassen, ist die Nut 110 so in dem Zahnrad 104 angebracht, dass das ausgesparte Material keine außermittige Belastung erzeugt. Das Zahnrad 104 ist unwuchtfrei, es ist gewichtsmäßig ausgeglichen. Daher werden nach einem Ausgestaltungsbeispiel 2 oder 3 gleichartige, vorzugsweise in mittlerer Höhe längsverlaufende, einzelne Zähne durchschneidende, Nuten in Umfangsrichtung angebracht. In diesem Fall fällt der Schwerpunkt 118 des Planetenrads 104 mit der Achse 116 des Planetenrads 104 zusammen. Der Schwerpunkt 118 des Planetenrads 104 liegt mittig in dem Inneren des Planetenrads 104.

**Bezugszeichenliste**

| Bezugszeichen | Name |
|---|---|
| 1 | Getriebe, insbesondere nach einem ersten Ausführungsbeispiel |
| 2 | Getriebe, insbesondere nach zweiten Ausführungsbeispiel |
| 3 | Hohlrad |
| 5 | Planetenrad, insbesondere äußeres Planetenrad |
| 7 | Planetenrad, insbesondere inneres Planetenrad |
| 9 | Sonnenrad |
| 11 | Kupplungseinrichtung |
| 11.1 | Kupplungsteil |
| 11.2 | Kupplungsteil |
| 11.3 | Freilaufkupplung |
| 12 | Schalteinrichtung |
| 12.1 | Bremselement |
| 12.2 | Bremselement |
| 13 | Kupplungsträger |
| 15 | Drehmomentstütze |
| 17 | Adapter |
| 19 | Stegeinrichtung |
| 19.1 | Erster Steg, insbesondere rechter Steg |
| 19.2 | Zweiter Steg, insbesondere linker Steg |
| 21 | Lauffläche, insbesondere aufvulkanisierte Riemenlauffläche |
| 23 | Kugellager |
| 25 | Hohlradinnenverzahnung |
| 27 | Freilaufhübertragungselement, insbesondere federangepresstes Rastelement |
| 29 | Einlegedichtung |
| 31 | Stegspannschrauben |
| 100 | Getriebe, insbesondere mit einfachem Planetensatz |
| 102 | Planetenrad |
| 104 | Planetenrad |
| 106 | Erster Begrenzungszahn |
| 108 | Zweiter Begrenzungszahn. |
| 110 | Nut, insbesondere Schmiernut |
| 112 | Mitte der Nut |
| 114 | Mitte des Zahnrades |
| 116 | Achse Zahnrad |
| 118 | Schwerpunkt Zahnrad |
| | |
| i | Übertragung oder Übertragungsverhaltnis, insbesondere Hohlrad auf Sonne, bzw. Betriebsmodus |
| x | Faktor in Verbindung mit dem Übersetzungsverhältnis |

## Patentansprüche

1. Motorgetriebenes Fahrzeug mit einer Hauptantriebseinrichtung, mit einer Nebenantriebseinrichtung für ein Nebenaggregat, wobei die Hauptantriebseinrichtung mit der Nebenantriebseinrichtung koppelt und eine an der Hauptantriebseinrichtung drehzahlabhängig erzeugte Leistung an die Nebenantriebseinrichtung überträgt,
**dadurch gekennzeichnet,**
- **dass** zwischen der Nebenantriebseinrichtung und dem Nehenaggregat ein unterbrechungsfrei mehrstufig schaltbares Getriebe (1, 2) angeordnet ist umfassend
ein Hohlrad (3), ein oder mehrere mit diesen permanent in Eingriff stehende äußere Planetenräder (5), wiederum mit diesen permanent in Eingriff stehende innere Planetenräder (7), welche mit dem konzentrisch angeordneten Sonnenrad (9) in Eingriff stehen, wobei über das Hohlrad (3) der Antrieb erfolgt, und
- **dass** das Getriebe (1, 2) mehrere Betriebsmodi aufweist, von denen wenigstens ein erster Betriebsmodus in Form von einer am Steg adaptierten elektromagnetischen Bremse (12) oder einer, vom Sonnenrad umschlossenen Kupplungseinrichtung (11) fremdbetätigt schaltbar ist.

2. Motorgetriebenes Fahrzeug nach Anspruch 1, **dadurch gekennzeichnet, dass** das Getriebe (1, 2) unter Beibehaltung der Drehrichtung ins Schnelle übersetzt.

3. Motorgetriebenes Fahrzeug nach einem der vorhergehenden Ansprüche, **dadurch gekennzeichnet, dass**
ein zweiter Betriebsmodus das Nebenaggregat stillsetzt

4. Motorgetriebenes Fahrzeug nach einem der vorhergehenden Ansprüche, **dadurch gekennzeichnet, dass**
die Betriebsmodi bis zu drei Schaltstufen umfassen, wobei mittels Bremse (12.1, 12.2) ein Betriebsmodus (i ≠ 1) einschaltbar ist.

5. Motorgetriebenes Fahrzeug nach Anspruch 4, **dadurch gekennzeichnet, dass** die drei Schaltstufen eine erste Schaltstufe i = 0, eine zweite Schaltstufe i = 1 und eine dritte Schaltstufe i ≠ 1 aufweisen, wobei die erste Schaltstufe die Stillsetzung, vorzugsweise des Nebenaggregats, bewirkt, die zweite Schaltstufe eine drehzahlgleiche Übertragung bewirkt und die dritte Schaltstufe i ≠ 1 eine Übersetzung oder Untersetzung bewirkt.

6. Motorgetriebenes Fahrzeug nach einem der vorhergehenden Ansprüche, **dadurch gekennzeichnet, dass**
das Hohlrad (3) durch ein Zugmittel getrieben ist.

7. Motorgetriebenes Fahrzeug nach einem der vorhergehenden Ansprüche, **dadurch gekennzeichnet, dass**
das Hohlrad (3) als innenverzahnte Riemenscheibe ausgebildet ist

8. Motorgetriebenes Fahrzeug nach einem der vorhergehenden Ansprüche, **dadurch gekennzeichnet, dass**
das Getriebe (1, 2) einen Kraftfluss von dem Hohlrad (3) auf das Sonnenrad (9) umlenkungsfrei, vorzugsweise mit der gleichen Orientierungsrichtung, insbesondere in der gleichen Ebene, überträgt.

9. Motorgetriebenes Fahrzeug nach einem der vorhergehenden Ansprüche, **dadurch gekennzeichnet, dass**
das Getriebe (1, 2) einen Momentenfluss von dem Hohlrad (3) auf das Sonnenrad (9) umlenkungsfrei, vorzugsweise mit der gleichen Orientierungsrichtung, insbesondere in der gleichen Ebene, überträgt.

10. Motorgetriebenes Fahrzeug nach einem der vorhergehenden Ansprüche, **dadurch gekennzeichnet, dass**
das Getriebe (1, 2) einen zylinderförmigen Steg (19), ein zylinderförmiges Sonnenrad (9) und ein zylinderförmiges Hohlrad (1) umfasst.

11. Motorgetriebenes Fahrzeug nach einem der vorhergehenden Ansprüche, **dadurch gekennzeichnet, dass**
wenigstens eines der Planetenräder (5 oder 7) des zwei Planetenräder (5; 7) umfassenden Planetengetriebes (1, 2) als nuttragendes Planetenrad (104) ausgestaltet ist, durch dessen Nut (110) ein Ölnebel zu einem Planetenradlager dringen kann.

12. Planetengetriebe (1, 2), das dazu bestimmt ist, drehzahlabhängig erzeugte Leistung einer Hauptantriebseinrichtung an eine Nebenantriebseinrichtung zu übertragen, wobei das Getriebe (1, 2) ein mehrstufig schaltbares, unterbrechungsfreies Getriebe (1, 2) ist,
**dadurch gekennzeichnet,**
- **dass** das Getriebe (1, 2) ein Hohlrad (3), ein oder mehrere mit diesem permanent in Eingriff stehende äußere Planetenräder (5), wiederum mit diesen permanent in Eingriff stehende innere Planetenräder (/), welche mit dem konzentrisch angeordneten Sonnenrad (9) in Eingriff stehen umfasst,
- **dass** das Hohlrad (3) das äußere Antriebsmittel darstellt, über das die Leistung aus der Hauptantriebseinrichtung auf die angebundene Nebenantriebseinrichtung einleitbar ist, und
- **dass** das Getriebe (1, 2) mehrere Betriebsmodi aufweist, von denen wenigstens ein erster Betriebsmodus in Form von einer am Steg adaptierten elektromagnetischen Bremse (12) oder einer vom Sonnenrad umschlossenen Kupplungseinrichtung (11) fremdbetätigt schaltbar ist.

13. Planetengetriebe (1, 2) nach Anspruch 12, **dadurch gekennzeichnet, dass**
auf dem Hohlrad (3) eine außenliegende Lauffläche (21) vorhanden ist, die als Berührungs- und Einleitungsfläche für einen Trieb, der aus der Hauptantriebseinrichtung zu speisen ist, dient.

14. Planetengetriebe (1, 2) nach einem der Ansprüche 12 oder 13, **dadurch gekennzeichnet, dass** das Getriebe (1, 2) unter Beibehaltung der Drehrichtung in das Schnelle übersetzt.

15. Planetengetriebe (1, 2) nach einem der Ansprüche 12 bis 14, **dadurch gekennzeichnet, dass** ein zweiter Betriebsmodus das Nebenaggregat stillsetzt.

16. Planetengetriebe (1, 1) nach einem der Ansprüche 12 bis 15, **dadurch gekennzeichnet, dass** die Betriebsmodi bis zu drei Schaltstufen umfassen, wobei mittels Bremse (12.1, 12.2) ein Betriebsmodus (i ≠ 1) einschaltbar ist.

17. Planetengetriebe (1, 2) nach Anspruch 16, **dadurch gekennzeichnet, dass**
die.drei Schaltstufen eine erste Schaltstufe i = U, eine zweite Schaltstufe i = 1 und eine dritte Schaltstufe i ≠ 1 aufweisen, wobei die erste Schaltstufe die Stillsetzung, vorzugsweise des Nebenaggregats, bewirkt, die zweite Schaltstufe eine drehzahlgleiche Übertragung bewirkt und die dritte Schaltstufe i ≠ 1 eine Übersetzung oder Untersetzung bewirkt.

18. Planetengetriebe (1, 2) nach einem der Ansprüche 12 bis 17, **dadurch gekennzeichnet, dass** das Hohlrad (3) durch ein Zugmittel antreibbar ist.

19. Planetengetriebe (1, 2) nach einem der Ansprüche 12 bis 18, **dadurch gekennzeichnet, dass** das Hohlrad (3) als innenverzahnte Riemenscheibe ausgebildet ist.

20. Planetengetriebe (1, 2) nach einem der Ansprüche 12 bis 19, **dadurch gekennzeichnet, dass** das Getriebe (1, 2) einen Kraftfluss von dem Hohlrad (3) auf das Sonnenrad (9) umlenkungsfrei vorzugsweise mit der gleichen Orientierungsrichtung, insbesondere in dergleichen Ebene, überträgt.

21. Planetengetriebe (1, 2) nach einem der Ansprüche 12 bis 19, **dadurch gekennzeichnet, dass**
das Getriebe (1, 2) einen Momentenfluss von dem Hohlrad (3) auf das Sonnenrad (9) umlenkungsfrei, vorzugsweise mit der gleichen Orientierungsrichtung, insbesondere in der gleichen Ebene, überträgt.

22. Planetengetriebe (1, 2) nach einem der Ansprüche 1 bis 21, **dadurch gekennzeichnet, dass**
das Getriebe (1, 2) einen zylinderförmigen Steg (19), ein im Wesentlichen zylinderförmiges Sonnenrad (9) und ein zylinderförmiges Hohlrad (3) umfasst.

23. Planetengetriebe (1, 2) nach einem der Ansprüche 12 bis 22, **dadurch gekennzeichnet, dass** wenigstens eines der Planetenräder (5 oder 7) des zwei Planetenräder (5, 7) umfassenden Planetengetriebes (1, 2) als nuttragendes Planetenrad (104) ausgestaltet ist, durch dessen Nut (110) ein Ölnebel zu einem Planetenradlager dringen kann.

24. Planetengetriebe (2) nach einem der Ansprüche 12 bis 23, **dadurch gekennzeichnet, dass** die elektromagnetische Bremseinrichtung (12) aus wenigstens zwei Bremselementen (12.1, 12.2) besteht und durch ein Bremsen zwischen den Betriebsmodi (i = 0, i = 1, i ≠ 1) schaltet.

## Claims

1. An engine-driven vehicle with a main drive device, with an auxiliary drive device for an auxiliary unit, wherein the main drive device couples with the auxiliary drive device and transmits power generated on the main drive device dependent on the rotational speed to the auxiliary drive device,
**characterized in**
- **that** between the auxiliary drive device and the auxiliary unit a gear mechanism (1, 2) shiftable without interruption in multiple stages is arranged, comprising a ring gear (3), permanently engaged with it one or several outer planetary gears (5), again with them permanently engaged inner planetary gears (7), which are engaged with the concentrically arranged sun gear (9), wherein the drive takes place via the ring gear (3), and
- **that** the gear mechanism (1, 2) offers several modes of operation, of which at least one first mode of operation can be switched by external actuation in the form of an electromagnetic brake (12) adapted to the bridge, or a coupling device (11) enclosed by the sun gear.

2. The engine-driven vehicle according to Claim 1, **characterized in that**
the gear mechanism (1, 2) steps up the transmission while maintaining the direction of rotation.

3. The engine-driven vehicle according to any one of the preceding claims, **characterized in that**
a second operating mode stops the auxiliary unit.

4. The engine-driven vehicle according to any one of the preceding claims, **characterized in that**
the operating modes comprise up to three shifting stages, wherein by means of brake (12.1, 12.2) an operating mode (i≠1) can be switched on.

5. The engine-driven vehicle according to Claim 4, **characterized in that**
the three shifting stages comprise a first shifting stage i=0, a second shifting stage i=1 and a third shifting stage i≠1, wherein the first shifting stage brings about the stoppage, preferentially of the auxiliary unit, the second shifting stage brings about an identical rotational speed transmission and the third shifting stage i≠1 brings about step-up transmission or step-down transmission.

6. The engine-driven vehicle according to any one of the preceding claims, **characterized in that**
the ring gear (3) is driven by a pulling means.

7. The engine-driven vehicle according to any one of the preceding claims, **characterized in that**
the ring gear (3) is designed as internally toothed belt pulley.

8. The engine-driven vehicle according to any one of the preceding claims, **characterized in that** the gear mechanism (1, 2) transmits a force flow from the ring gear (3) to the sun gear (9) free of deflection, preferentially with the same orientation direction, more preferably in the same plane.

9. The engine-driven vehicle according to any one of the preceding claims, **characterized in that** the gear mechanism (1, 2) transmits a moment flow from the ring gear (3) to the sun gear (9) free of deflection, preferentially with the same orientation direction, more preferably in the same plane.

10. The engine-driven vehicle according to any one of the preceding claims, **characterized in that** the gear mechanism (1, 2) comprises a cylinder-shaped bridge (19), a cylinder-shaped sun gear (9) and a cylinder-shaped ring gear (3).

11. The engine-driven vehicle according to any one of the preceding claims, **characterized in that** at least one of the planetary gears (5 or 7) of the planetary gear set (1, 2) comprising two planetary gears (5, 7) is embodied as slot-carrying planetary gear (104), through whose slot (110) an oil mist is able to get to a planetary gear bearing.

12. A planetary gear set (1, 2) which is intended to transmit power of a main drive device generated in a rotational speed-dependent manner to an auxiliary drive device, wherein the gear mechanism (1, 2) is a gear mechanism (1, 2) that can be shifted without interruption in multiple stages,
**characterized in**
- **that** the gear mechanism (1, 2) comprises a ring gear (3), permanently engaged with it one or several outer planetary gears (5), again with them permanently engaged inner planetary gears (7), which are engaged with the concentrically arranged sun gear (9),
- **that** the ring gear (3) constitutes the outer drive means, via which the power from the main drive device is introduced into the auxiliary drive device and
- **that** the gear mechanism (1, 2) offers several modes of operation, of which at least one first mode of operation can be switched by external actuation in the form of an electromagnetic brake (12) adapted to the bridge, or a coupling device (11) enclosed by the sun gear.

13. The planetary gear set (1, 2) according to Claim 12, **characterized in that**
on the ring gear (3) an externally positioned running surface (21) is present, which serves as contact or introduction surface for a drive to be fed from the main drive device.

14. The planetary gear set (1, 2) according to any one of the Claims 12 or 13, **characterized in that**
the gear mechanism (1, 2) steps up the transmission while maintaining the direction of rotation.

15. The planetary gear set (1, 2) according to any one of the Claims 12 to 14, **characterized in that**
a second operating mode stops the auxiliary unit.

16. The planetary gear set (1, 2) according to any one of the Claims 12 to 15, **characterized in that**
the operating modes comprise up to three shifting stages, wherein by means of brake (12.1, 12.2) an operating mode (i≠1) can be switched on.

17. The planetary gear set (1, 2) according to Claim 16, **characterized in that**
the three shifting stages comprise a first shifting stage i=0, a second shifting stage i=1 and a third shifting stage i≠1 wherein the first shifting stage brings about the stoppage preferentially of the auxiliary unit, the second shifting stage brings about identical rotational speed transmission and the third shifting stage i≠1 brings about step-up transmission or step-down transmission.

18. The planetary gear set (1, 2) according to any one of the Claims 12 to 17, **characterized in that**
the ring gear (3) is driven by a pulling means.

19. The planetary gear set (1, 2) according to any one of the Claims 12 to 18, **characterized in that**
the ring gear (3) is designed as internally toothed belt pulley.

20. The planetary gear set (1, 2) according to any one of the Claims 12 to 19, **characterized in that**
the gear mechanism (1, 2) transmits a force flow from the ring gear (3) to the sun gear (9) free of deflection, preferentially with the same orientation direction, more preferably in the same plane.

21. The planetary gear set (1, 2) according to any one of the Claims 12 to 19, **characterized in that**
the gear mechanism (1, 2) transmits a moment flow from the ring gear (3) to the sun gear (9) free of deflection, preferentially with the same orientation direction, more preferably in the same plane.

22. The planetary gear set (1, 2) according to any one of the Claims 12 to 21, **characterized in that**
the gear mechanism (1, 2) comprises a cylinder-shaped bridge (19), a cylinder-shaped sun gear (9) and a cylinder-shaped ring gear (3).

23. The planetary gear set (1, 2) according to any one of the Claims 12 to 22, **characterized in that**
at least one of the planetary gears (5 or 7) of the planetary gear set (1, 2) comprising two planetary gears (5, 7) is embodied as slot-carrying planetary gear (104) through whose slot (110) an oil mist is able to get to a planetary gear bearing.

24. The planetary gear set (2) according to any one of the Claims 12 to 23, **characterized in that**
the electromagnetic braking device (12) consists of at least two braking elements (12.1, 12.2) and shifts between the operating modes (i=0, i=1, i≠1) through braking.

## Revendications

1. Véhicule motorisé doté d'un dispositif d'entraînement principal, d'un dispositif d'entraînement secondaire pour un groupe auxiliaire, le dispositif d'entraînement principal s'accouplant au dispositif d'entraînement secondaire et transmettant au dispositif d'entraînement secondaire une puissance produite au niveau du dispositif d'entraînement principal en fonction du régime;
**caractérisé en ce que**:
- un engrenage (1, 2) à plusieurs étages pouvant changer de vitesse sans rupture est disposé entre le dispositif d'entraînement secondaire et le groupe auxiliaire, ledit engrenage comprenant:
une roue creuse (3), une ou plusieurs roues planétaires (5) extérieures engrenées en permanence avec elle, des roues planétaires (7) intérieures à leur tour engrenées avec celles-ci de façon permanente, lesdites roues planétaires intérieures étant engrenées avec la roue solaire (9) disposée de façon concentrique, l'entraînement se produisant par l'intermédiaire de la roue creuse (3); et
- l'engrenage (1, 2) comporte plusieurs modes de fonctionnement parmi lesquels au moins un premier mode de fonctionnement peut être commuté depuis l'extérieur sous la forme d'un frein (12) électromagnétique adapté au segment ou d'un dispositif d'embrayage (11) entouré par la roue solaire.

2. Véhicule motorisé selon la revendication 1, **caractérisé en ce que**:
l'engrenage (1, 2) effectue une multiplication de transmission en conservant son sens de rotation.

3. Véhicule motorisé selon l'une quelconque des revendications précédentes, **caractérisé en ce que**:
un deuxième mode de fonctionnement arrête le groupe auxiliaire.

4. Véhicule motorisé selon l'une quelconque des revendications précédentes, **caractérisé en ce que**:
les modes de fonctionnement comportent jusqu'à trois étages de changement de vitesse, un mode de fonctionnement (i ≠ 1) pouvant être enclenché à l'aide du frein (12.1, 12.2).

5. Véhicule motorisé selon la revendication 4, **caractérisé en ce que**:
les trois étages de changement de vitesse comportent un premier étage de changement de vitesse i = 0, un deuxième étage de changement de vitesse i = 1 et un troisième étage de changement de vitesse i ≠ 1, le premier étage de changement de vitesse ayant pour effet l'arrêt, de préférence du groupe auxiliaire, le deuxième étage de changement de vitesse ayant pour effet une transmission à la même vitesse de rotation et le troisième étage de changement de vitesse i ≠ 1 ayant pour effet une multiplication ou une démultiplication du rapport.

6. Véhicule motorisé selon l'une quelconque des revendications précédentes, **caractérisé en ce que**:
la roue creuse (3) est engrenée par un moyen de traction.

7. Véhicule motorisé selon l'une quelconque des revendications précédentes, **caractérisé en ce que**:
la roue creuse (3) est réalisée sous la forme d'une poulie à denture intérieure.

8. Véhicule motorisé selon l'une quelconque des revendications précédentes, **caractérisé en ce que**:
l'engrenage (1, 2) transmet le flux de force sans déviation, de la roue creuse (3) à la roue solaire (9), de préférence avec la même orientation, notamment dans le même plan.

9. Véhicule motorisé selon l'une quelconque des revendications précédentes, **caractérisé en ce que**:
l'engrenage (1, 2) transmet un flux de moment sans déviation, de la roue creuse (3) à la roue solaire (9), de préférence avec la même orientation, notamment dans le même plan.

10. Véhicule motorisé selon l'une quelconque des revendications précédentes, **caractérisé en ce que**:
l'engrenage (1, 2) comprend un segment (19) cylindrique, une roue solaire (9) cylindrique et une roue creuse (3) cylindrique.

11. Véhicule motorisé selon l'une quelconque des revendications précédentes, **caractérisé en ce que**:
au moins une des roues planétaires (5 ou 7) de l'engrenage planétaire (1, 2) comprenant deux roues planétaires (5, 7) prend la forme d'une roue planétaire (104) portant une rainure (110) pouvant être traversée par un nuage d'huile jusqu'à un palier de roue planétaire.

12. Engrenage planétaire (1, 2) destiné à transmettre à un dispositif d'entraînement secondaire la puissance produite au niveau d'un dispositif d'entraînement principal en fonction du régime, l'engrenage (1, 2) étant un engrenage (1, 2) à plusieurs étages pouvant changer de vitesse sans rupture;
**caractérisé en ce que**:
- l'engrenage (1, 2) comprend une roue creuse (3), une ou plusieurs roues planétaires (5) extérieures engrenées avec elle de façon permanente, des roues planétaires (7) intérieures à leur tour engrenées en permanence avec elle, lesdites roues planétaires intérieures étant engrenées avec la roue solaire (9) disposée de façon concentrique;
- la roue creuse (3) représente le moyen d'entraînement extérieur par l'intermédiaire duquel la puissance émanant du dispositif d'entraînement principal peut être transmise au dispositif d'entraînement secondaire rattaché; et
- l'engrenage (1, 2) comporte plusieurs modes de fonctionnement parmi lesquels au moins un premier mode de fonctionnement peut être commuté depuis l'extérieur sous la forme d'un frein (12) électromagnétique adapté au segment ou d'un dispositif d'embrayage (11) entouré par la roue solaire.

13. Engrenage planétaire (1, 2) selon la revendication 12, **caractérisé en ce que**:
une surface de roulement (21) extérieure est prévue sur la roue creuse (3), ladite surface servant de surface de contact et d'admission pour une transmission alimentée par le dispositif d'entraînement principal.

14. Engrenage planétaire (1, 2) selon l'une quelconque des revendications 12 ou 13, **caractérisé en ce que**:
l'engrenage (1, 2) effectue une multiplication de transmission en conservant le sens de rotation.

15. Engrenage planétaire (1, 2) selon l'une quelconque des revendications 12 à 14, **caractérisé en ce que**:
un deuxième mode de fonctionnement arrête le groupe auxiliaire.

16. Engrenage planétaire (1, 2) selon l'une quelconque des revendications 12 à 15, **caractérisé en ce que**:
les modes de fonctionnement comportent jusqu'à trois étages de changement de vitesse, un mode de fonctionnement (i ≠ 1) pouvant être enclenché à l'aide du frein (12.1, 12.2).

17. Engrenage planétaire (1, 2) selon la revendication 16, **caractérisé en ce que**:
les trois étages de changement de vitesse comportent un premier étage de changement de vitesse i = 0, un deuxième étage de changement de vitesse i = 1 et un troisième étage de changement de vitesse 1 ≠ 1, le premier étage de changement de vitesse ayant pour effet l'arrêt, de préférence du groupe auxiliaire, le deuxième étage de changement de vitesse ayant pour effet une transmission à la même vitesse de rotation et le troisième étage de changement de vitesse i ≠ 1 ayant pour effet une multiplication ou une démultiplication du rapport.

18. Engrenage planétaire (1, 2) selon l'une quelconque des revendications 12 à 17, **caractérisé en ce que**:
la roue creuse (3) peut être entraînée par un moyen de traction.

19. Engrenage planétaire (1, 2) selon l'une quelconque des revendications 12 à 18, **caractérisé en ce que**:
la roue creuse (3) est réalisée sous la forme d'une poulie à denture intérieure.

20. Engrenage planétaire (1, 2) selon l'une quelconque des revendications 12 à 19, **caractérisé en ce que**:
l'engrenage (1, 2) transmet un flux de force sans déviation, de la roue creuse (3) à la roue solaire (9), de préférence avec la même orientation, notamment dans le même plan.

21. Engrenage planétaire (1, 2) selon l'une quelconque des revendications 12 à 19, **caractérisé en ce que**:
l'engrenage (1, 2) transmet un flux de moment sans déviation, de la roue creuse (3) à la roue solaire (9), de préférence avec la même orientation, notamment dans le même plan.

22. Engrenage planétaire (1, 2) selon l'une quelconque des revendications 12 à 21, **caractérisé en ce que**:
l'engrenage (1, 2) comporte un segment (19) cylindrique, une roue solaire (9) cylindrique et une roue creuse (3) cylindrique.

23. Engrenage planétaire (1, 2) selon l'une quelconque des revendications 12 à 22, **caractérisé en ce que**:
au moins une des roues planétaires (5 ou 7) de l'engrenage planétaire (1, 2) comportant deux roues planétaires (5, 7) prend la forme d'une roue planétaire (104) portant une rainure (110) pouvant être traversée par un nuage d'huile jusqu'à un palier de roue planétaire.

24. Engrenage planétaire (2) selon l'une quelconque des revendications 12 à 23, **caractérisé en ce que**:
le dispositif de freinage (12) électromagnétique se compose d'au moins deux éléments de frein (12.1, 12.2) et passe d'un mode de fonctionnement (i = 0, i =1, i ≠ 1) à un autre par le biais d'une action de freinage.
